# EUROPEAN PATENT APPLICATION

(11) **EP 4 290 900 A1**
(43) Date of publication of application: **13.12.2023**
(21) Application number: 22749171.9
(22) Date of filing: 29.01.2022
(51) Int. Cl.: H04W 8/14

(54) **INFORMATION PROCESSING METHOD AND APPARATUS, COMMUNICATION DEVICE, AND READABLE STORAGE MEDIUM**

(30) Priority: 05.02.2021 CN 202110164997
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Conti, Marco
(86) International application number: PCT/CN2022/075021
(87) International publication number: WO 2022/166892

(57) **Abstract**

Embodiments of this application provide an information processing method and apparatus, a communication device, and a readable storage medium, and relate to the field of communication technologies. A specific implementation includes: acquiring first information; and performing a first operation based on the first information, where the first information includes at least one of the following: capability information of a terminal, capability information of a first network, capability information of a first server, access type information of the terminal for accessing the first network, and a credential and/or subscription acquisition manner requested by the terminal; and the first operation includes at least one of the following: determining to accept access of the terminal, or determining to reject access of the terminal; determining a reject cause; determining a value of first indication information; incorporating a first reject cause into a first message and sending the first message; and incorporating the first indication information into a second message and sending the second message, where the first message is a message for rejecting the access of the terminal, and the second message is a message for accepting the access of the terminal.

## Description

### CROSS-REFERENCE TO RELATED APPLICATIONS

This application claims priority to Chinese Patent Application No. 202110164997.4, filed in China on February 05, 2021, which is incorporated herein by reference in its entirety.

### TECHNICAL FIELD

Embodiments of this application relate to the field of communication technologies, and in particular, to an information processing method and apparatus, a communication device, and a readable storage medium.

### BACKGROUND

At present, in order to download a credential for accessing a standalone non-public network (Standalone Non-public Network, SNPN) to access another network, a terminal may be configured with a first list. The terminal can access a network in the first list to acquire a credential of another network. However, in some cases, the network in the first list may prohibit or not support a credential download type for the terminal. In such cases, it is necessary to operate the first list to avoid selection of the corresponding network. In view of this, how a credential download process of the terminal is guaranteed is an urgent problem to be solved at present.

### SUMMARY

Embodiments of this application provide an information processing method and apparatus, a communication device, and a readable storage medium, to guarantee a credential download process of a terminal.

According to a first aspect, an information processing method is provided. The information processing method is applied to a network-side device and includes:
acquiring first information; and
performing a first operation based on the first information; where
the first information includes at least one of the following: capability information of a terminal, capability information of a first network, capability information of a first server, access type information of the terminal for accessing the first network, and a credential and/or subscription acquisition manner requested by the terminal;
the first operation includes at least one of the following:
   determining to accept access of a terminal, or determining to reject access of the terminal;
   determining a reject cause;
   determining a value of first indication information;
   incorporating a first reject cause into a first message and sending the first message; and
   incorporating the first indication information into a second message and sending the second message; where
   the first message is a message for rejecting the access of the terminal, and the second message is a message for accepting the access of the terminal;
   the first indication information is used to indicate at least one of the following: supporting or not supporting configuration of a credential and/or subscription; supporting or not supporting configuration of a credential and/or subscription through a control plane; and supporting or not supporting configuration of a credential and/or subscription through a user plane;
   the first reject cause is used to indicate at least one of the following: not allowing or not supporting the terminal to acquire a credential and/or subscription; not allowing or not supporting the terminal to acquire a credential and/or subscription through a control plane; not allowing or not supporting the terminal to acquire a credential and/or subscription through a user plane; access of the terminal not allowed by a network; SNPN not allowed; and PLMN not allowed;
   the capability information of the terminal includes at least one of the following: supporting or not supporting acquisition of credential and/or subscription; supporting or not supporting acquisition of credential and/or subscription through a control plane; and supporting or not supporting acquisition of credential and/or subscription through a user plane;
   the capability information of the first network and/or the capability information of the first server includes at least one of the following: supporting or not supporting configuration of a credential and/or subscription; supporting or not supporting configuration of a credential and/or subscription through a control plane; and supporting or not supporting configuration of a credential and/or subscription through a user plane;
   the access type information of the terminal for accessing the first network includes one of the following: a type of a first access manner and a type of a non-first access manner;
   the first access manner includes at least one of the following: an access manner of accessing the network to acquire a credential and/or subscription; an access manner of accessing the network with restriction; and an access manner of accessing the network with a default credential; and
   the credential and/or subscription acquisition manner requested by the terminal includes at least one of the following: acquiring a credential and/or subscription through a control plane; and acquiring a credential and/or subscription through a user plane.

According to a second aspect, an information processing method is provided. The information processing method is applied to a terminal and includes:
performing a second operation, where
the second operation includes at least one of the following:
   determining to initiate deregistration to a first network, or determining not to initiate deregistration to a first network;
   initiating deregistration to the first network;
   deleting the first network from a first list; and
   adding the first network to a second list; where
   the first list includes any one of the following: one or more network objects, and identifier information of one or more network objects; where a characteristic of a network in the first list includes at least one of the following: allowing the terminal to access with restriction; allowing the terminal to acquire a credential and/or subscription; and allowing the terminal to access with a default credential; or
   the first list includes at least one of the following: a list of networks allowing restricted access; a list of networks capable of configuring a credential and/or subscription; and a list of networks allowing access with a default credential;
   the second list includes any one of the following: one or more network objects, and identifier information of one or more network objects; where a characteristic of a network in the second list includes at least one of the following: not allowing access of the terminal; not allowing the terminal to acquire a credential and/or subscription; and not allowing the terminal to access with a default credential; or
   the second list includes at least one of the following: a list of networks not allowing restricted access; a list of networks incapable of configuring a credential and/or subscription; and a list of networks not allowing access with a default credential;
   the list of networks includes one or more network objects, or the list of networks includes identifier information of one or more network objects; and
   the network object includes a network and/or a network group.

According to a third aspect, an information processing apparatus is provided. The information processing apparatus is applied to a network-side device and includes:
an acquiring module, configured to acquire first information; and
a first execution module, configured to perform a first operation based on the first information; where
the first information includes at least one of the following: capability information of a terminal, capability information of a first network, capability information of a first server, access type information of the terminal for accessing the first network, and a credential and/or subscription acquisition manner requested by the terminal;
the first operation includes at least one of the following:
   determining to accept access of the terminal, or determining to reject access of the terminal;
   determining a reject cause;
   determining a value of first indication information;
   incorporating a first reject cause into a first message and sending the first message; and
   incorporating the first indication information into a second message and sending the second message; where
   the first message is a message for rejecting the access of the terminal, and the second message is a message for accepting the access of the terminal;
   the first indication information is used to indicate at least one of the following: supporting or not supporting configuration of a credential and/or subscription; supporting or not supporting configuration of a credential and/or subscription through a control plane; and supporting or not supporting configuration of a credential and/or subscription through a user plane;
   the first reject cause is used to indicate at least one of the following: not allowing or not supporting the terminal to acquire a credential and/or subscription; not allowing or not supporting the terminal to acquire a credential and/or subscription through a control plane; not allowing or not supporting the terminal to acquire a credential and/or subscription through a user plane; access of the terminal not allowed by a network; SNPN not allowed; and PLMN not allowed;
   the capability information of the terminal includes at least one of the following: supporting or not supporting acquisition of credential and/or subscription; supporting or not supporting acquisition of credential and/or subscription through a control plane; and supporting or not supporting acquisition of credential and/or subscription through a user plane;
   the capability information of the first network and/or the capability information of the first server includes at least one of the following: supporting or not supporting configuration of a credential and/or subscription; supporting or not supporting configuration of a credential and/or subscription through a control plane; and supporting or not supporting configuration of a credential and/or subscription through a user plane;
   the access type information of the terminal for accessing the first network includes one of the following: a type of a first access manner and a type of a non-first access manner;
   the first access manner includes at least one of the following: an access manner of accessing the network to acquire a credential and/or subscription; an access manner of accessing the network with restriction; and an access manner of accessing the network with a default credential; and
   the credential and/or subscription acquisition manner requested by the terminal includes at least one of the following: acquiring a credential and/or subscription through a control plane; and acquiring a credential and/or subscription through a user plane.

According to a fourth aspect, an information processing apparatus is provided. The information processing apparatus is applied to a terminal and includes:
a second execution module, configured to perform a second operation, where
the second operation includes at least one of the following:
   determining to initiate deregistration to a first network, or determining not to initiate deregistration to a first network;
   initiating deregistration to the first network;
   deleting the first network from a first list; and
   adding the first network to a second list; where
   the first list includes any one of the following: one or more network objects, and identifier information of one or more network objects; where a characteristic of a network in the first list includes at least one of the following: allowing the terminal to access with restriction; allowing the terminal to acquire a credential and/or subscription; and allowing the terminal to access with a default credential; or
   the first list includes at least one of the following: a list of networks allowing restricted access; a list of networks capable of configuring a credential and/or subscription; and a list of networks allowing access with a default credential;
   the second list includes any one of the following: one or more network objects, and identifier information of one or more network objects; where a characteristic of a network in the second list includes at least one of the following: not allowing access of the terminal; not allowing the terminal to acquire a credential and/or subscription; and not allowing the terminal to access with a default credential; or
   the second list includes at least one of the following: a list of networks not allowing restricted access; a list of networks incapable of configuring a credential and/or subscription; and a list of networks not allowing access with a default credential;
   the list of networks includes one or more network objects, or the list of networks includes identifier information of one or more network objects; and
   the network object includes a network and/or a network group.

According to a fifth aspect, an embodiment of this application provides a communication device including a processor, a memory, and a program or instructions stored in the memory and capable of running on the processor, where when the program or the instructions are executed by the processor, the steps of the method according to the first aspect are implemented, or the steps of the method according to the second aspect are implemented.

According to a sixth aspect, an embodiment of this application provides a readable storage medium, where the readable storage medium stores a program or instructions, and when the program or the instructions are executed by a processor, the steps of the method according to the first aspect are implemented, or the steps of the method according to the second aspect are implemented.

According to a seventh aspect, a chip is provided, where the chip includes a processor and a communication interface, the communication interface is coupled to the processor, and the processor is configured to run a program or instructions to implement the steps of the method according to the first aspect or the steps of the method according to the second aspect.

According to an eighth aspect, a computer program product is provided, where the computer program product is stored in a non-volatile storage medium, and the computer program product is executed by at least one processor to implement the steps of the method according to the first aspect or to implement the steps of the method according to the second aspect.

In the embodiments of this application, through the operation performed by the network-side device, the terminal can know whether its acquisition of the credential and/or subscription is supported or not supported, helping the terminal to maintain the first list and select a network.

### BRIEF DESCRIPTION OF DRAWINGS

Persons of ordinary skill in the art can clearly understand various other advantages and benefits by reading detailed description of preferred embodiments below. The accompanying drawings are merely intended to illustrate the preferred embodiments and should not be construed as a limitation on this application. Throughout the accompanying drawings, the same reference numerals represent the same components. In the drawings:
FIG. 1 is a schematic architectural diagram of a wireless communication system according to an embodiment of this application;
FIG. 2 is a schematic flowchart of an information processing method according to an embodiment of this application;
FIG. 3 is a schematic flowchart of an information processing method according to another embodiment of this application;
FIG. 4 is a schematic flowchart of an information processing method in application scenario 1 according to an embodiment of this application;
FIG. 5 is a schematic flowchart of an information processing method in application scenario 2 according to an embodiment of this application;
FIG. 6 is a schematic structural diagram of an information processing apparatus according to this application;
FIG. 7 is a schematic structural diagram of another information processing apparatus according to this application; and
FIG. 8 is a structural diagram of a communication device according to this application.

### DESCRIPTION OF EMBODIMENTS

The following clearly and completely describes the technical solutions in the embodiments of this application with reference to the accompanying drawings in the embodiments of this application. Apparently, the described embodiments are merely some rather than all of the embodiments of this application. All other embodiments obtained by persons of ordinary skill in the art based on the embodiments of this application without creative efforts shall fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

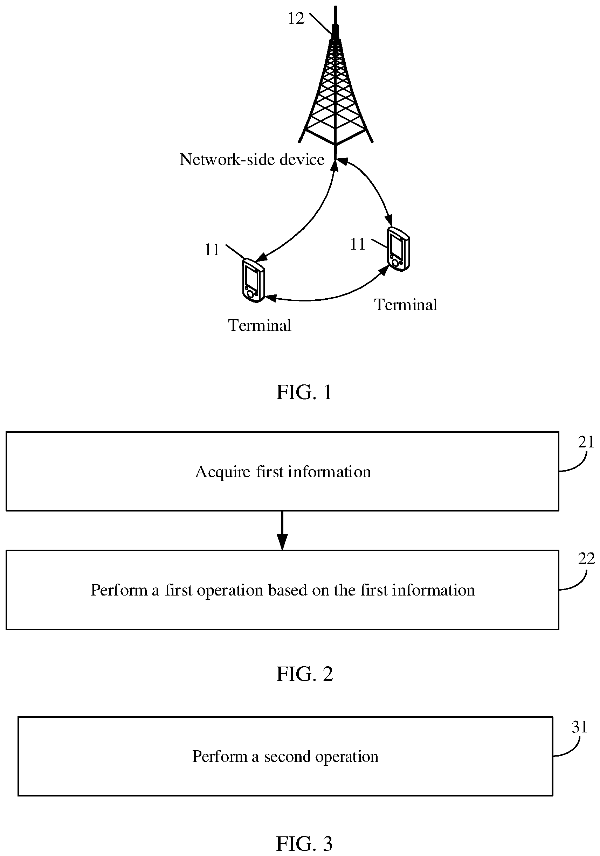

FIG. 1 is a block diagram of a wireless communication system to which the embodiments of this application are applicable. The wireless communication system includes a terminal 11 and a network-side device 12. The terminal 11 may include a relay supporting a terminal function and/or a terminal supporting a relay function. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile internet device (Mobile Internet Device, MID), a wearable device (Wearable Device) or vehicle user equipment (Vehicle User Equipment, VUE), or pedestrian user equipment (Person User Equipment, PUE). The wearable device includes: a wrist band, earphones, glasses, or the like. It should be noted that the terminal 11 is not limited to any particular type in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a wireless local area network (Wireless Local Area Network, WLAN) access point, a wireless fidelity (Wireless Fidelity, WiFi) node, a transmitting receiving point (Transmitting Receiving Point, TRP), or some other appropriate terms in the art. The base station is not limited to a specific technical term as long as the same technical effects are achieved. It should be noted that the base station in the NR system is taken merely as an example in the embodiments of this application, but the base station is not limited to any specific type.

In an optional embodiment of this application, "able to" can represent at least one of the following: allow, support, tend to, and preferentially have capability. "Unable to" can represent at least one of the following: not allow, not support, not allow, not tend to, and have no capability.

In an optional embodiment of this application, obtaining or acquiring may be understood as acquiring from configuration, receiving, receiving upon a request, obtaining through self-learning, obtaining through deduction based on information not being received, or obtaining through processing based on received information, which may be specifically determined depending on actual needs. This is not limited in the embodiments of this application. For example, if specific capability indication information sent by a device is not received, it can be deduced that the device does not support the capability.

In an optional embodiment of this application, sending may include broadcasting, broadcasting through a system message, or returning a response after receiving the request.

In an optional embodiment of this application, a non-public network is an abbreviation of non public network. The non-public network may be referred to as one of the following: a non-public communication network. The non-public network may include at least one of the following deployment manners: a physical non-public network, a virtual non-public network, and a non-public network implemented on a public network. In an implementation, the non-public network is a closed access group (Closed Access Group, CAG). A CAG may include a group of terminals.

In an optional embodiment of this application, a non-public network service is an abbreviation of non public network service. The non-public network service may also be referred to as one of the following: non-public-network network service, non-public communication service, non-public network communication service, non-public-network network service, or other names. It should be noted that the naming manner is not specifically limited in the embodiments of this application. In an implementation, the non-public network is a closed access group, and in this case, the non-public network service is a network service of the closed access group.

In an optional embodiment of this application, the non-public network may include or be referred to as a private network. The private network may be referred to as one of the following: a private communication network, a private network, a local area network (Local Area Network, LAN), a private virtual network (Virtual Private Network, PVN), an isolated communication network, a dedicated communication network, or other names. It should be noted that the naming manner is not specifically limited in the embodiments of this application.

In an optional embodiment of this application, a public network is an abbreviation of public network. The public network may be referred to as one of the following: a public communication network or other names. It should be noted that the naming manner is not specifically limited in the embodiments of this application.

In an optional embodiment of this application, the communication device may include at least one of the following: a communication network element and a terminal.

In an optional embodiment of this application, the communication network element may include at least one of the following: a core-network network element and a radio-access-network network element.

In an optional embodiment of this application, the core-network (Core Network, CN) network element may include but is not limited to at least one of the following: a core network device, a core network node, a core network function, a core-network network element, a mobility management entity (Mobility Management Entity, MME), an access management function (Access Management Function, AMF), a session management function (Session Management Function, SMF), a user plane function (User Plane Function, UPF), a serving gateway (serving GW, SGW), a public data network (Public Data Network, PDN) gateway (Gate Way), a policy control function (Policy Control Function, PCF), a policy and charging rules function (Policy and Charging Rules Function, PCRF) unit, a general packet radio service (General Packet Radio Service, GPRS) serving GPRS support node (Serving GPRS Support Node, SGSN), a gateway GPRS support node (Gateway GPRS Support Node, GGSN), unified data management (Unified Data Management, UDM), a unified data repository (Unified Data Repository, UDR), a home subscriber server (Home Subscriber Server, HSS), and an application function (Application Function, AF).

In an optional embodiment of this application, a RAN network element may include but is not limited to at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved NodeB (evolved Node B, eNB), a 5G base station (gNB), a radio network controller (Radio Network Controller, RNC), a base station (NodeB), a non-3GPP interworking function (Non-3GPP Inter Working Function, N3IWF), an access controller (Access Controller, AC) node, an access-point (Access Point, AP) device, a wireless local area network (Wireless Local Area Networks, WLAN) node, and an N3IWF.

In some communication scenarios, there are scenarios in which a terminal having no credential of a network still needs to access the network. For example, during deployment of a standalone non-public network (Standalone Non-public Network, SNPN), the UE may still have no credential and no UE identifier for accessing the SNPN, for example, an SNPN deployed in a factory and a terminal just purchased in the market, or an SNPN deployed at a concert site and terminals of audience.

In the related technology, a terminal (for example, user equipment (User Equipment, UE)) can access a public land mobile network (Public Land Mobile Network, PLMN) or a standalone non-public network (Standalone Non-Public Network, SNPN) 1 to download a credential of a first object (for example, a credential of SNPN2 or a credential for secondary authentication and/or authorization). When the UE has no credential of SNPN1 (for example, a credential for non-restricted access), if SNPN1 supports a function of a first access manner (for example, onboarding), SNPN1 can be referred to as an onboarding SNPN (O-SNPN for short). The first access manner may be an access manner of accessing a network with restriction and/or acquiring a credential of a first network via the network. When accessing an Onboarding SNPN, the UE has no credential of the O-SNPN (has no credential for non-restricted access), and a default credential (Default credential, for example, a credential for restricted access) to access the O-SNPN, and also provides an onboarding indication for illustrating particularity of a registration type of the UE. Therefore, in an O-SNPN scenario, two functions are provided:
(1) accessing a network based on default credential onboarding (Default credential onboarding) or restricted access; and
(2) configuring a credential and/or subscription of a first object.

A cell of an O-SNPN can broadcast an onboarding indication for the UE to select the O-SNPN and acquire the credential and/or subscription of the first object.

When a credential of SNPN2 is downloaded via a PLMN or SNPN3, as the UE has a credential (for example, a credential for non-restricted access) for accessing a PLMN or SNPN3, essentially the PLMN or SNPN3 may not support function (1) but may only support function (2).

For the UE, if the UE needs to obtain a credential and/or subscription of a first object (for example, SNPN2), a first list is configured on the UE. The UE can access a network in the first list to obtain the credential and/or subscription of the first object, where the first list may be a hybrid list including networks of PLMN and/or SNPN types.

The terminal can select a network according to the first list.

In the embodiments of this application, the following problems need to be solved:
Problem 1: In an O-SNPN scenario, when the UE attempts to access a first network in a registration type of a first access manner (for example, onboarding), if the first network does not allow or not support a credential download type of the UE (for example, the UE supports download through a control plane and the network supports download through a user plane; or the UE supports download through a user plane and the network supports download through a control plane), registration is rejected. Once such registration reject is received from the first network, the terminal needs to operate the first list to avoid reselection. However, the first list is not a list of networks for normal registration. For example, the UE has one default credential but may have a requirement for downloading multiple SNPN lists. Each first object (SNPN) may have one first list.

A solution may be: deleting the first network from the first list corresponding to the first object based on a first reject cause. The first reject cause may be an existing cause or a new cause value.

Problem 2: In a PLMN or SNPN3 scenario, downloading the credential of the first object may be only one of the purposes for which the UE registers with the PLMN or SNPN3, meaning that the registration type is not the first access manner (for example, onboarding). When the first network does not allow or not support the credential download type of the UE, registration may still be accepted, but first indication information is to be sent, for example, for indicating not supporting configuration of a credential and/or subscription in a control manner, not supporting configuration of a credential and/or subscription through a user plane, or not supporting configuration of a credential and/or subscription. After receiving the indication, the UE determines whether to detach from the first network and select another network for acquiring a credential and/or subscription. If the UE still has a service other than that for acquiring a credential and/or subscription, the UE may not perform detach (detach), but stay on the first network to perform other services. In addition, based on the first indication information, the UE may also delete the first network from the first list corresponding to the first object.

In an optional embodiment of this application, the first access manner includes at least one of the following: an access manner of accessing a network to acquire a credential and/or subscription; an access manner of accessing a network with restriction; and an access manner of accessing a network with a default credential.

In an implementation, a manner of accessing a network with restriction to download a credential for accessing a first object or a manner of accessing a network to download a credential for accessing a first object may be referred to as onboarding. When the first object includes a network A, the first network and the network A may be a same network or different networks. The first network is a network accessed by the terminal, for example, a network currently accessed by the terminal.

In an optional embodiment of this application, the first server is a server for configuring a credential and/or subscription of a first object for the terminal.

In this embodiment of this application, the configuration of a credential and/or subscription includes at least one of the following: configuring a credential and/or subscription based on restricted access, and configuring a credential and/or subscription based on non-restricted access.
(1) Optionally, the configuration of a credential and/or subscription through a control plane includes at least one of the following: configuring a credential and/or subscription through a control plane based on restricted access, and configuring a credential and/or subscription through a control plane based on non-restricted access.
(2) Optionally, the configuration of a credential and/or subscription through a user plane includes at least one of the following: configuring a credential and/or subscription through a user plane based on restricted access, and configuring a credential and/or subscription through a user plane based on non-restricted access.
(3) Optionally, the acquisition of a credential and/or subscription includes: acquiring a credential and/or subscription based on restricted access, and acquiring a credential and/or subscription based on non-restricted access.
(4) Optionally, the acquisition of a credential and/or subscription through a control plane includes at least one of the following: acquiring a credential and/or subscription through a control plane based on restricted access, and acquiring a credential and/or subscription through a control plane based on non-restricted access.
(5) Optionally, the acquisition of a credential and/or subscription through a user plane includes at least one of the following: acquiring a credential and/or subscription through a user plane based on restricted access, and acquiring a credential and/or subscription through a user plane based on non-restricted access.
(6) Optionally, the configuration of a credential and/or subscription includes at least one of the following: configuring a credential and/or subscription through a control plane; and configuring a credential and/or subscription through a user plane.

Optionally, the acquisition of a credential and/or subscription may include at least one of the following: acquiring a credential and/or subscription through a control plane; and acquiring a credential and/or subscription through a user plane.

Optionally, the credential and/or subscription includes at least one of the following: a credential and/or subscription of a first object, a credential and/or subscription for primary authentication and/or authorization, a credential and/or subscription for authorization, a credential and/or subscription for non-primary authentication, and a credential and/or subscription for non-authorization; where
the first object includes at least one of the following: a network A, a first entity, a network accessed by the terminal, primary authentication and/or authorization, and non-primary authentication and/or authorization;
the first entity includes one of the following: an entity in a data network, an entity outside a network to which the terminal belongs, and an entity outside the first network, where the first network is a network accessed by the terminal; and
the network A is the same as or different from the first network.

In an optional embodiment of this application, the supporting configuration of a credential and/or subscription is used for further indicating at least one of the following: supporting configuration of a credential and/or subscription through a control plane; and supporting configuration of a credential and/or subscription through a user plane.

In an optional embodiment of this application, the not supporting configuration of a credential and/or subscription is used for further indicating not supporting configuration of a credential and/or subscription through a control plane, and not supporting configuration of a credential and/or subscription through a user plane.

In an optional embodiment of this application, the acquisition of a credential and/or subscription refers to remote acquisition of a credential and/or subscription. For example, in a case that the terminal accesses the first network to acquire a credential and/or subscription, the credential and/or subscription is provided by the first entity. The first entity is an entity in a data network (Data Network, DN) or an entity (entity) outside a network accessed by the terminal.

In an optional embodiment of this application, a credential and/or subscription is provided by one of the following: an entity outside a network in the first list, an entity outside a network accessed by the terminal, an entity in a data network (DN), and an entity in another network. The entity in the data network may be an application server, or a credential and/or subscription configuration server in the data network. An intent of the terminal for accessing a network includes obtaining a credential and/or subscription.

In an optional embodiment of this application, the credential and/or subscription is a credential and/or subscription for a network accessed by the terminal. The credential and/or subscription for a network accessed by the terminal includes at least one of the following: a credential and/or subscription for the network accessed by the terminal based on non-restricted access, and a credential and/or subscription for the network accessed by the terminal based on restricted access.

In an optional embodiment of this application, the credential and/or subscription includes at least one of the following: a credential and/or subscription for non-restricted access, a credential and/or subscription for restricted access, a credential and/or subscription for primary authentication and/or authorization, and a credential and/or subscription for non-primary authentication and/or authorization. The primary authentication (for example, primary authentication (Primary Authentication)) may include: authentication and key agreement (Authentication and Key Agreement, AKA), for example, 5th generation communication technology (5th generation, 5G) AKA and extensible authentication protocol (Extensible Authentication Protocol, EAP) AKA.

The non-primary authentication and/or authorization includes at least one of the following: secondary authentication and/or authorization (Secondary authentication/authorization) and network slice-specific authentication and/or authorization (Network Slice-Specific Authentication and Authorization, NSSAA).

In an implementation, the terminal can access the first network with a credential (for example, a default credential) and/or subscription for accessing a network with restriction, and then obtains a credential and/or subscription for non-restricted access to a first object (including a network A) via the first network. The network A is the same as or different from the first network.

In an optional embodiment of this application, the obtaining of the credential and/or subscription through a control plane and/or the configuration of the credential and/or subscription through a control plane includes at least one of the following: configuring, by a first entity, the credential and/or subscription for the terminal through control plane signaling of the network accessed by the terminal; and acquiring, by the terminal, the credential and/or subscription from the first entity through control plane signaling of the network accessed by the terminal.

In an optional embodiment of this application, the obtaining of the credential and/or subscription through a user plane and/or the configuration of the credential and/or subscription through a user plane includes at least one of the following: establishing, by the terminal, a data channel on the network accessed by the terminal and acquiring the credential and/or subscription from the first entity via the data channel; or configuring, by the first entity, the credential and/or subscription for the terminal via a data channel established by the terminal on the network accessed.

In an optional embodiment of this application, the data channel may include but is not limited to one of the following: a protocol data unit (Protocol Data Unit, PDU) session, a PDN connection, a quality of service (Quality of Service, QoS) flow, a bearer, and an internet protocol security (Internet Protocol Security, IPsec) channel, where the bearer may be an evolved radio access bearer (Evolved Radio Access Bearer, E-RAB), a radio access bearer (Evolved Radio Access Bearer, RAB), a data radio bearer (Data Radio Bearer, DRB), a signaling radio bearer (Signalling radio bearers, SRB), or the like.

In an optional embodiment of this application, the network allowing access with a default credential includes a network to which the terminal can obtain a restricted connection by using a terminal identifier corresponding to the default credential.

In an optional embodiment of this application, the default credential includes a credential for restricted access.

In an optional embodiment of this application, restricted access and restricted connection have the same meaning and can be used interchangeably.

In an implementation, the restricted access includes at least one of the following: only allowing establishment of a first data channel; not allowing establishment of a data channel other than the first data channel; only allowing acquisition of a credential and/or subscription; and not allowing a service other than that for acquiring a credential and/or subscription. The first data channel is a data channel for acquiring a credential and/or subscription.

In an implementation, a credential and/or subscription of a first object can be obtained based on restricted access.

In an optional embodiment of this application, the restricted access includes restricted control-plane access and/or restricted user-plane access.

In an optional embodiment of this application, the restricted connection includes restricted control-plane connection and/or restricted user-plane connection. Through the restricted connection, a credential and/or subscription can be obtained.

In an optional embodiment of this application, the network allowing access with a default credential includes a network allowing access using a terminal identifier corresponding to a default credential and allowing the terminal to pass network authentication and/or authorization using the default credential.

In an optional embodiment of this application, the network in the first list includes a network mapped by a network group in the first list. One network group can be mapped to one or more networks.

In an optional embodiment of this application, a network in a list of networks capable of configuring a credential and/or subscription includes a network allowing restricted access of the terminal and allowing the terminal to obtain a credential and/or subscription.

In an optional embodiment of this application, a characteristic of a network in the first list includes a network allowing restricted access and allowing the terminal to obtain a credential and/or subscription.

In an optional embodiment of this application, subscription (subscription) includes subscription data (subscription data), for example, slice information and data network name (Data Network Name, DNN).

In an optional embodiment of this application, the network A refers to a network in general or refers to one or more networks in particular.

In an optional embodiment of this application, network types of the network in the first list, the network in the second list, and/or the network A include at least one of the following: public network, non-public network, PLMN, PNI NPN, and SNPN.

In an optional embodiment of this application, a credential and/or subscription of the first object includes: a credential and/or subscription for accessing the first object. The credential and/or subscription for accessing the first object includes at least one of the following: a credential and/or subscription for accessing the first object based on non-restricted access, and a credential and/or subscription for accessing the first object based on restricted access.

In an optional embodiment of this application, a credential and/or subscription of the network A includes: a credential and/or subscription for accessing the network A. The credential and/or subscription for accessing the network A includes at least one of the following: a credential and/or subscription for accessing the network A based on non-restricted access, and a credential and/or subscription for accessing the network A based on restricted access.

In an optional embodiment of this application, the configuring a credential and/or subscription for the terminal includes allowing the terminal to obtain a credential and/or subscription.

In an optional embodiment of this application,
(1) optionally, allowing the terminal to obtain a credential and/or subscription includes configuring a credential and/or subscription for the terminal;
(2) optionally, allowing the terminal to obtain a credential and/or subscription through a control plane includes configuring a credential and/or subscription for the terminal through a control plane;
(3) optionally, allowing the terminal to obtain a credential and/or subscription through a user plane includes configuring a credential and/or subscription for the terminal through a user plane;
(4) optionally, allowing the terminal to obtain a credential and/or subscription of a first object through a control plane includes configuring a credential and/or subscription of the first object for the terminal through a control plane;
   and/or
(5) optionally, allowing the terminal to obtain a credential and/or subscription of a first object through a user plane includes configuring a credential and/or subscription of the first object for the terminal through a user plane.

In an optional embodiment of this application,
(1) optionally, the configuring a credential and/or subscription for the terminal includes allowing the terminal to obtain a credential and/or subscription;
(2) optionally, the configuring a credential and/or subscription for the terminal through a control plane includes allowing the terminal to obtain a credential and/or subscription through a control plane;
(3) optionally, the configuring a credential and/or subscription for the terminal through a user plane includes allowing the terminal to obtain a credential and/or subscription through a user plane;
(4) optionally, the configuring a credential and/or subscription of the first object for the terminal through a control plane includes allowing the terminal to obtain a credential and/or subscription of the first object through a control plane;
   and/or
(5) optionally, the configuring a credential and/or subscription of the first object for the terminal through a user plane includes allowing the terminal to obtain a credential and/or subscription of the first object through a user plane. It is easy to understand that in a case that the credential and/or subscription of the first network is provided by an entity outside a network accessed by the terminal, the configuring a credential and/or subscription for the terminal can be understood as allowing the terminal to obtain the credential and/or subscription of the first object through a user plane.

The following describes the information processing method in the embodiments of this application.

Referring to FIG. 2, an embodiment of this application provides an information processing method applied to a network-side device, where the network-side device includes but is not limited to a CN network element. The CN network element is, for example, an AMF. As shown in FIG. 2, the method includes the following steps.

Step 21: Acquire first information.

Optionally, the first information may include at least one of the following: capability information of a terminal, capability information of a first network, capability information of a first server, access type information of the terminal for accessing the first network, and a credential and/or subscription acquisition manner requested by the terminal.

The capability information of the terminal may include at least one of the following: supporting or not supporting acquisition of credential and/or subscription; supporting or not supporting acquisition of credential and/or subscription through a control plane; and supporting or not supporting acquisition of credential and/or subscription through a user plane.

The capability information of the first network and/or the capability information of the first server may include at least one of the following: supporting or not supporting configuration of a credential and/or subscription; supporting or not supporting configuration of a credential and/or subscription through a control plane; and supporting or not supporting configuration of a credential and/or subscription through a user plane.

The access type information of the terminal for accessing the first network may include one of the following: a type of a first access manner and a type of a non-first access manner.

The first access manner may include at least one of the following: an access manner of accessing a network to acquire a credential and/or subscription; an access manner of accessing a network with restriction; and an access manner of accessing a network with a default credential.

The credential and/or subscription acquisition manner requested by the terminal may include at least one of the following: acquiring a credential and/or subscription through a control plane; and acquiring a credential and/or subscription through a user plane.

Step 22: Perform a first operation based on the first information.

Optionally, the first operation may include at least one of the following:
determining to accept access of the terminal (for example, registration accept), or determining to reject access of the terminal (for example, registration reject);
determining a reject cause;
determining a value of first indication information;
incorporating a first reject cause into a first message and sending the first message; and
incorporating the first indication information into a second message and sending the second message.

The first message is a message for rejecting the access of the terminal, for example, a registration reject message. The second message is a message for accepting the access of the terminal, for example, a registration accept message.

The first indication information is used to indicate at least one of the following: supporting or not supporting configuration of a credential and/or subscription; supporting or not supporting configuration of a credential and/or subscription through a control plane; and supporting or not supporting configuration of a credential and/or subscription through a user plane.

It can be understood that the supporting or not supporting herein generally refers to being supported by a network, or being determined as supported or not supported based on the capability of the network and the terminal.

The first reject cause is used to indicate at least one of the following: not allowing or not supporting the terminal to acquire a credential and/or subscription; not allowing or not supporting the terminal to acquire a credential and/or subscription through a control plane; not allowing or not supporting the terminal to acquire a credential and/or subscription through a user plane; access of the terminal not allowed by a network; SNPN not allowed; and PLMN not allowed.

In an implementation, the "network" in "access of the terminal not allowed by a network" is a network which the terminal requests to access, that is, the first network.

In another implementation, the reject cause for not allowing the terminal to access the network may be one of the following: PLMN not allowed (PLMN not allowed), and SNPN not allowed (SNPN not allowed). For example, when the network accessed by the terminal is a network of an SNPN type, SNPN not allowed or PLMN not allowed may be used to indicate that access is not allowed by a network. The PLMN not allowed represents that a network which the terminal requests to access rejects access of the terminal. The SNPN not allowed represents that the terminal requests to access a network of an SNPN type and that network rejects access of the terminal. It should be noted that the PLMN not allowed is an existing cause.

In this embodiment of this application, the performing a first operation may include:
in a case that a first condition is satisfied, performing at least one of the following:
determining to reject access of the terminal to the first network;
sending the first reject cause;
sending a message for rejecting the access of the terminal; and
sending a message for rejecting the access of the terminal, where the message for rejecting the access of the terminal includes the first reject cause.

The first condition may include at least one of the following:
an access type (for example, a registration type) of the terminal for accessing the first network is the type of the first access manner (onboarding);
the terminal has no credential and/or subscription for non-restricted access to the first network;
the credential and/or subscription for the terminal to access the first network is a credential and/or subscription for restricted access, for example, a default credential type;
authentication and/or authorization fails and the terminal is unable to access the first network; and
the first network is one of the following: a public network (including PLMN and PNI NPN), and a network of a PLMN type.

The first network may satisfy at least one of the following:
not supporting a credential and/or subscription acquisition manner supported or requested by the terminal;
not allowing a credential and/or subscription acquisition manner supported or requested by the terminal;
not supporting the terminal in acquiring a credential and/or subscription of the first object via the first network; and
not allowing the terminal to acquire a credential and/or subscription of the first object via the first network.

Optionally, the first object may include the network A. The first network and the network A may be a same network or different networks.

In an implementation, the credential and/or subscription for the restricted access type includes a default credential. After access to the first network via default credential authentication and/or authorization, only a restricted service can be acquired. For example, only a restricted data channel can be established, and the restricted data channel is used for only acquiring a credential and/or subscription of the first object.

In another implementation, the credential and/or subscription is a credential and/or subscription for a non-restricted service. In a case that the terminal has a credential and/or subscription, the terminal can acquire a non-restricted service from the first network.

Optionally, the performing a first operation may include:
in a case that a second condition is satisfied, performing at least one of the following:
determining to accept access of the terminal to the first network;
determining that the value of the first indication information is at least one of the following: not supporting configuration of a credential and/or subscription; not supporting configuration of a credential and/or subscription through a control plane; and not supporting configuration of a credential and/or subscription through a user plane;
sending a message for accepting the access of the terminal; and
sending a message for accepting the access of the terminal, where the message for accepting the access of the terminal includes the first indication information.

The second condition may include at least one of the following:
a terminal access type (for example, a registration type) is the type of the non-first access manner (onboarding);
the terminal has a credential and/or subscription for restricted access to the first network;
the terminal has a credential and/or subscription for non-restricted access to the first network;
authentication and/or authorization succeeds and the terminal is able to access the first network;
the first network allows or supports a first service, the first service being a service other than that for acquiring a credential and/or subscription of the first object via the first network; and
the first network is one of the following: a non-public network and a network of an SNPN type.

Optionally, the first network and/or the first server satisfies at least one of the following:
not supporting a credential and/or subscription acquisition manner supported or requested by the terminal;
not allowing a credential and/or subscription acquisition manner supported or requested by the terminal;
not supporting the terminal in acquiring a credential and/or subscription of the first object via the first network; and
not allowing the terminal to acquire a credential and/or subscription of the first object via the first network.

Optionally, the type of the non-first access manner may include any one of the following: initial registration, mobility registration update, periodic registration update, and emergency registration.

Optionally, that the first network and/or the first server does not support a credential and/or subscription acquisition manner supported or requested by the terminal may include at least one of the following:
the terminal only supports or requests acquisition of a credential and/or subscription through a control plane, and the first network and/or the first server only supports configuration of a credential and/or subscription through a user plane;
the terminal only supports or requests acquisition of a credential and/or subscription through a control plane, and the first network and/or the first server does not support configuration of a credential and/or subscription through a control plane;
the terminal only supports or requests acquisition of a credential and/or subscription through a user plane, and the first network and/or the first server only supports configuration of a credential and/or subscription through a control plane;
the terminal only supports or requests acquisition of a credential and/or subscription through a user plane, and the first network and/or the first server does not support configuration of a credential and/or subscription through a user plane; and
the first network and/or the first server does not support the terminal in acquiring a credential and/or subscription.

Optionally, that the first network and/or the first server does not allow a credential and/or subscription acquisition manner supported or requested by the terminal may include at least one of the following:
the terminal only supports or requests acquisition of a credential and/or subscription through a control plane, and the first network and/or the first server only allows configuration of a credential and/or subscription through a user plane;
the terminal only supports or requests acquisition of a credential and/or subscription through a control plane, and the first network and/or the first server does not allow configuration of a credential and/or subscription through a control plane;
the terminal only supports or requests acquisition of a credential and/or subscription through a user plane, and the first network and/or the first server only allows configuration of a credential and/or subscription through a control plane;
the terminal only supports or requests acquisition of a credential and/or subscription through a user plane, and the first network and/or the first server does not allow configuration of a credential and/or subscription through a user plane; and
the first network and/or the first server does not allow the terminal to acquire a credential and/or subscription.

It is easy to understand that according to the embodiments of this application, through the operation performed by the network-side device, the terminal can know whether its acquisition of a credential and/or subscription is supported or not supported, helping the terminal to maintain the first list and select a network.

Referring to FIG. 3, an embodiment of this application further provides an information processing method applied to a terminal. As shown in FIG. 3, the method includes the following step.

Step 31. Perform a second operation.

Optionally, the second operation may include at least one of the following:
determining to initiate deregistration to a first network, or determining not to initiate deregistration to a first network;
initiating deregistration to the first network;
deleting the first network from a first list; and
adding the first network to a second list.

The first list includes any one of the following: one or more network objects, and identifier information of one or more network objects. A characteristic of a network in the first list includes at least one of the following: allowing the terminal to access with restriction; allowing the terminal to acquire a credential and/or subscription; and allowing the terminal to access with a default credential.

Alternatively, the first list includes at least one of the following: a list of networks allowing restricted access; a list of networks capable of configuring a credential and/or subscription; and a list of networks allowing access with a default credential.

The second list includes any one of the following: one or more network objects, and identifier information of one or more network objects; where a characteristic of a network in the second list includes at least one of the following: not allowing access of the terminal; not allowing the terminal to acquire a credential and/or subscription; and not allowing the terminal to access with a default credential.

Alternatively, the second list includes at least one of the following: a list of networks not allowing restricted access; a list of networks incapable of configuring a credential and/or subscription; and a list of networks not allowing access with a default credential.

Optionally, the list of networks includes one or more network objects, or the list of networks includes identifier information of one or more network objects.

Optionally, the network object includes a network and/or a network group.

Optionally, the credential and/or subscription includes at least one of the following: a credential and/or subscription of a first object, a credential and/or subscription for primary authentication and/or authorization, a credential and/or subscription for authorization, a credential and/or subscription for non-primary authentication, and a credential and/or subscription for non-authorization.

The first object includes at least one of the following: a network A, a first entity, a network accessed by the terminal, primary authentication and/or authorization, and non-primary authentication and/or authorization.

The first entity includes one of the following: an entity in a data network, an entity outside a network to which the terminal belongs, and an entity outside the first network, where the first network is a network accessed by the terminal.

In an implementation, the network A is the same as or different from a network in the first list.

In an implementation, the network A is the same as or different from a network in the second list.

Optionally, the acquisition of a credential and/or subscription includes at least one of the following: acquiring a credential and/or subscription through a control plane; and acquiring a credential and/or subscription through a user plane.

Optionally, the list of networks capable of configuring a credential and/or subscription includes at least one of the following: a list of networks capable of configuring a credential and/or subscription through a control plane, and a list of networks capable of configuring a credential and/or subscription through a user plane.

Optionally, the allowing the terminal to acquire a credential and/or subscription includes at least one of the following: allowing the terminal to acquire a credential and/or subscription through a control plane, and allowing the terminal to acquire a credential and/or subscription through a user plane.

In this embodiment of this application, the first list is a first list corresponding to a first object, first lists corresponding to different first objects being the same or different.

Optionally, the second list is a second list corresponding to a first object, second lists corresponding to different first objects being the same or different.

Optionally, the list of networks capable of configuring a credential and/or subscription includes a list of networks capable of configuring a credential and/or subscription of a first object.

Optionally, the list of networks incapable of configuring a credential and/or subscription includes a list of networks incapable of configuring a credential and/or subscription of a first object.

Optionally, the allowing the terminal to acquire a credential and/or subscription includes: allowing the terminal to acquire a credential and/or subscription of a first object.

Optionally, the not allowing the terminal to acquire a credential and/or subscription includes: not allowing the terminal to acquire a credential and/or subscription of a first object.

Optionally, the first list corresponding to the first object includes: a control plane-based first list corresponding to the first object, and a user plane-based first list corresponding to the first object.

The control plane-based first list corresponding to the first object is the same as or different from the user plane-based first list corresponding to the first object.

A network in the control plane-based first list corresponding to the first object includes: a network allowing the terminal to acquire a credential and/or subscription of the first object through a control plane.

A network in the user plane-based first list corresponding to the first object includes: a network allowing the terminal to acquire a credential and/or subscription of the first object through a user plane.

Optionally, the second list corresponding to the first object includes: a control plane-based second list corresponding to the first object, and a user plane-based second list corresponding to the first object.

The control plane-based second list corresponding to the first object is the same as or different from the user plane-based second list corresponding to the first object.

A network in the control plane-based second list corresponding to the first object includes: a network not allowing the terminal to acquire a credential and/or subscription of the first object through a control plane.

A network in the user plane-based second list corresponding to the first object includes: a network not allowing the terminal to acquire a credential and/or subscription of the first object through a user plane.

Optionally, the list of networks capable of configuring a credential and/or subscription of the first object includes at least one of the following: a list of networks capable of configuring the credential and/or subscription of the first object through a control plane, and a list of networks capable of configuring the credential and/or subscription of the first object through a user plane.

Optionally, the list of networks incapable of configuring a credential and/or subscription of the first object includes at least one of the following: a list of networks incapable of configuring the credential and/or subscription of the first object through a control plane, and a list of networks incapable of configuring the credential and/or subscription of the first object through a user plane.

Optionally, the allowing the terminal to acquire a credential and/or subscription of a first object includes at least one of the following: allowing the terminal to acquire the credential and/or subscription of the first object through a control plane, and allowing the terminal to acquire the credential and/or subscription of the first object through a user plane.

Optionally, the not allowing the terminal to acquire a credential and/or subscription of a first object includes at least one of the following: not allowing the terminal to acquire the credential and/or subscription of the first object through a control plane, and not allowing the terminal to acquire the credential and/or subscription of the first object through a user plane.

In this embodiment of this application, the performing a second operation may include:
in a case that a third condition is satisfied, initiating deregistration to the first network.

The third condition includes at least one of the following:
an intent of the terminal for accessing the first network is to acquire the credential and/or subscription of the first object via the first network;
an access type of accessing the first network by the terminal is the type of the first access manner (onboarding); and
the terminal fails to acquire the credential and/or subscription of the first object via the first network.

In an implementation, that an intent of the terminal for accessing the first network is to acquire the credential and/or subscription of the first object via the first network includes: the only intent of the terminal for accessing the first network is to acquire the credential and/or subscription of the first object via the first network.

Optionally, the performing a second operation may include:
in a case that a fourth condition is satisfied, determining not to initiate deregistration to the first network.

An intent of the terminal for accessing the first network is not limited to acquiring the credential and/or subscription of the first object via the first network.

An access type of accessing the first network by the terminal is the type of the non-first access manner (onboarding).

The terminal fails to acquire the credential and/or subscription of the first object via the first network.

Optionally, the performing a second operation may include:
in a case that a fifth condition is satisfied, deleting the first network from the first list and/or adding the first network to the second list.

The fifth condition includes: the terminal fails to acquire a credential and/or subscription of a first object via the first network.

In an implementation, the first list is a first list corresponding to the first object, and the second list is a second list of the first object.

Further, that the terminal fails to acquire the credential and/or subscription of the first object via the first network may include at least one of the following:
the terminal fails to acquire the credential and/or subscription of the first object through a control plane;
the terminal fails to acquire the credential and/or subscription of the first object through a user plane;
a timer expires or a waiting time expires, but no credential and/ or subscription of the first object has been received from a control plane of the first network;
the initiated acquisition of the credential and/or subscription of the first object through a user plane fails;
the terminal only supports acquisition of the credential and/or subscription of the first object through a control plane, but has not received a second credential and/or subscription from a control plane of the first network before a timer expires or a waiting time expires;
the terminal only supports acquisition of the credential and/or subscription of the first object through a user plane, and an initiated request for a second credential and/or subscription through a user plane fails;
the terminal supports acquisition of the credential and/or subscription of the first object through a control plane and a user plane, but has not received a second credential and/or subscription from a control plane of the first network before a timer expires or a waiting time expires, and the initiated acquisition of the credential and/or subscription of the first object through a user plane fails; and
the terminal supports acquisition of the credential and/or subscription through a control plane and a user plane, and the initiated acquisition of the credential and/or subscription of the first object through a user plane fails.

In an implementation, the terminal starts a timer or starts to wait after having acquired an access success message, but has not received the credential and/or subscription of the first object from a control plane of the first network before the timer expires or the waiting time expires. This means one of the following: acquisition of the credential and/or subscription of the first object through a control plane fails; the first network does not support the terminal in acquiring the credential and/or subscription of the first object through a control plane; and the first server does not support the terminal in acquiring the credential and/or subscription of the first object through a control plane.

In an implementation, the terminal acquires a duration or waiting time of a timer, where the timer or the waiting time is used for waiting for reception of a credential and/ or subscription of the first object from a control plane of the first network. The duration or waiting time of the timer may be pre-configured in the terminal or acquired from the first network.

Optionally, that the acquisition of the credential and/or subscription of the first object through a user plane fails includes at least one of the following: establishment of a data channel of the first network fails; acquisition of the credential and/or subscription of the first object from the first server fails; the first network does not support the terminal in acquiring the credential and/or subscription of the first object through a user plane; and the first server does not support the terminal in acquiring the credential and/or subscription of the first object through a user plane.

Optionally, the acquisition of the credential and/or subscription of the first object through a control plane includes: the first server configures the credential and/or subscription of the first object for the terminal through a control plane signaling of the first network, or the terminal acquires the credential and/or subscription of the first object through a control plane of the first network. The first server may be used to configure the credential and/or subscription of the first object for the terminal.

Optionally, the acquisition of the credential and/or subscription of the first object through a user plane includes: establishing, by the terminal, a first data channel of the first network, and requesting the credential and/or subscription of the first object from the first server via the first data channel. The first server may be used to configure the credential and/or subscription of the first object for the terminal.

In this embodiment of this application, the performing a second operation includes:
acquiring second information, and performing the second operation based on the second information.

The second information includes at least one of the following: an access reject message, a first reject cause, and first indication information; where the first indication information is used to indicate at least one of the following: not supporting the terminal in acquiring a credential and/or subscription, not supporting the terminal in acquiring a credential and/or subscription through a control plane, and not supporting the terminal in acquiring a credential and/or subscription through a user plane.

The first reject cause is used to indicate at least one of the following: not allowing or not supporting the terminal to acquire a credential and/or subscription; not allowing or not supporting the terminal to acquire a credential and/or subscription through a control plane; not allowing or not supporting the terminal to acquire a credential and/or subscription through a user plane; access of the terminal not allowed by a network; SNPN not allowed; and PLMN not allowed.

It should be noted that a network type in the first indication information includes SNPN, NPN, and the like. The network in the first indication information may be represented as a network A. The network in the first indication information may refer to a network in general, and specifically refers to a network A in some cases.

Optionally, the performing a second operation may include:
in a case that a sixth condition is satisfied, initiating deregistration to the first network.

The sixth condition includes at least one of the following:
an intent of the terminal for accessing the first network is to acquire the credential and/or subscription of the first object via the first network;
an access type of accessing the first network by the terminal is the type of the first access manner (onboarding);
the first indication information indicates at least one of the following: not supporting configuration of a credential and/or subscription; not supporting configuration of a credential and/or subscription through a control plane; and not supporting configuration of a credential and/or subscription through a user plane;
the first indication information indicates not supporting the terminal in acquiring a credential and/or subscription through a control plane, and the terminal only supports acquisition of a credential and/or subscription through a control plane; and
the first indication information indicates not supporting the terminal in acquiring a credential and/or subscription through a user plane, and the terminal only supports acquisition of a credential and/or subscription through a user plane.

Optionally, the performing a second operation may include:
in a case that a seventh condition is satisfied, determining not to initiate deregistration to the first network.

The seventh condition includes at least one of the following:
an intent of the terminal for accessing the first network is not limited to acquiring the credential and/or subscription of the first object via the first network;
an access type of accessing the first network by the terminal is the type of the non-first access manner (onboarding);
the first indication information indicates not supporting the terminal in acquiring a credential and/or subscription;
the first indication information indicates not supporting the terminal in acquiring a credential and/or subscription through a control plane, and the terminal only supports acquisition of a credential and/or subscription through a control plane; and
the first indication information indicates not supporting the terminal in acquiring a credential and/or subscription through a user plane, and the terminal only supports acquisition of a credential and/or subscription through a user plane.

Optionally, the performing a second operation may include:
in a case that an eighth condition is satisfied, deleting the first network from the first list and/or adding the first network to the second list.

The eighth condition includes at least one of the following:
an access reject message has been acquired; and
a first reject cause has been acquired or first indication information has been acquired; where
the first indication information indicates not supporting the terminal in acquiring a credential and/or subscription;
the first indication information indicates not supporting the terminal in acquiring a credential and/or subscription through a control plane, and the terminal only supports acquisition of a credential and/or subscription through a control plane; and
the first indication information indicates not supporting the terminal in acquiring a credential and/or subscription through a user plane, and the terminal only supports acquisition of a credential and/or subscription through a user plane.

Optionally, the performing a second operation may include:
in a case that a ninth condition is satisfied, deleting the first network from a first list for acquiring a credential and/or subscription through a control plane and/or adding the first network to a second list for acquiring a credential and/or subscription through a control plane.

The ninth condition includes: the first indication information indicates not supporting the terminal in acquiring a credential and/or subscription through a control plane.

Optionally, the performing a second operation may include:
in a case that a tenth condition is satisfied, deleting the first network from a first list for acquiring a credential and/or subscription through a user plane and/or adding the first network to a second list for acquiring a credential and/or subscription through a user plane.

The tenth condition includes at least one of the following:
an access reject message has been acquired; and
a first reject cause has been acquired or first indication information has been acquired; where
the first reject cause indicates not allowing the terminal to acquire a credential and/or subscription through a user plane; and
the first indication information indicates not supporting the terminal in acquiring a credential and/or subscription through a user plane.

In an implementation, the terminal supports both a control plane manner and a user plane manner, and initiates a request for a credential and/or subscription through a user plane after a waiting time for the control plane manner expires. It is easy to understand that in such case, if the request of a credential and/or subscription through a user plane fails, it means that both the requests through the control plane and the user plane fail. In this case, the credential and/or subscription cannot be acquired via the first network, the terminal may deregister from the first network, and delete the first network from the first list.

It is easy to understand that according to this embodiment, the UE can maintain the first list and select a network.

The following describes the method provided in this application with reference to specific application scenarios.

### Application scenario 1

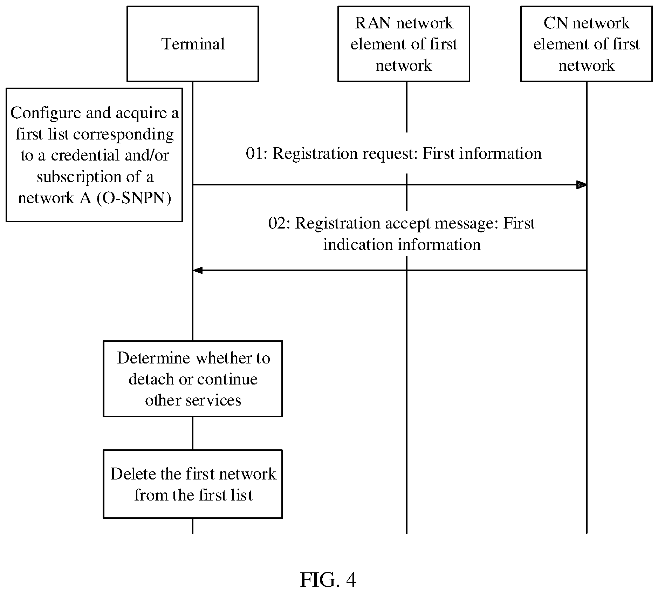

In application scenario 1, the terminal is configured with a first list (for example, a list including both O-SNPN and PLMN) corresponding to a credential and/or subscription of a network A (O-SNPN). As shown in FIG. 4, a corresponding information processing process may include the following steps.

Step 01: The terminal UE initiates a registration request to a CN network element (for example, an AMF) of the first network. The registration request includes first information. The first information is as described above, and details are not repeated herein.

Step 02: The CN network element of the first network sends a registration accept message to the UE, where the registration accept message includes first indication information. The first indication information is as described above, and details are not repeated herein.

Step 03: The terminal determines whether to leave the first network (for example, deregistering from the first network) or stay on the first network to continue other services. Details are as described in the embodiment shown in FIG. 3, which are not described herein again.

Step 04: The terminal deletes the first network from the first list. Details are as described in the embodiment shown in FIG. 3, which are not described herein again.

### Application scenario 2

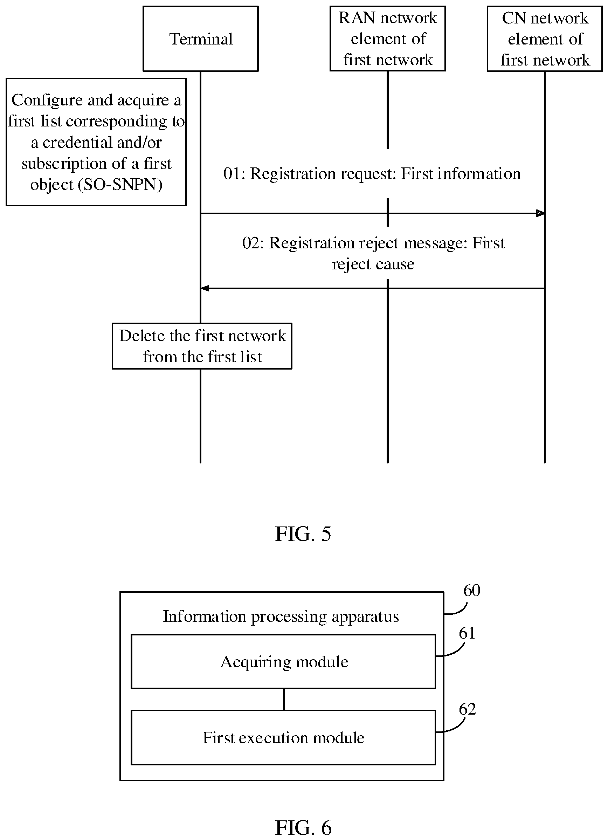

In application scenario 2, the terminal is configured with a first list (for example, a list of networks including both O-SNPN and PLMN) corresponding to a credential and/or subscription of a first object (for example, SO-SNPN). As shown in FIG. 5, a corresponding information processing process may include the following steps.

Step 01: The terminal UE initiates a registration request to a CN network element (for example, an AMF) of the first network. The registration request includes first information. The first information is as described above, and details are not repeated herein.

Step 02: The CN network element of the first network sends a registration reject message to the UE, where the registration reject message includes a first reject cause. The first reject cause is as described in FIG. 2, and details are not repeated herein.

Step 03: The terminal deletes the first network from the first list. Details are as described in the embodiment shown in FIG. 3, which are not described herein again.

Referring to FIG. 6, an embodiment of this application provides an information processing apparatus applied to a network-side device. As shown in FIG. 6, the information processing apparatus 60 includes:
an acquiring module 61, configured to acquire first information; and
a first execution module 62, configured to perform a first operation based on the first information.

The first information includes at least one of the following: capability information of a terminal, capability information of a first network, capability information of a first server, access type information of the terminal for accessing the first network, and a credential and/or subscription acquisition manner requested by the terminal.

The first operation includes at least one of the following:
determining to accept access of the terminal, or determining to reject access of the terminal;
determining a reject cause;
determining a value of first indication information;
incorporating a first reject cause into a first message and sending the first message; and
incorporating the first indication information into a second message and sending the second message.

The first message is a message for rejecting the access of the terminal, and the second message is a message for accepting the access of the terminal.

The first indication information is used to indicate at least one of the following: supporting or not supporting configuration of a credential and/or subscription; supporting or not supporting configuration of a credential and/or subscription through a control plane; and supporting or not supporting configuration of a credential and/or subscription through a user plane.

The first reject cause is used to indicate at least one of the following: not allowing or not supporting the terminal to acquire a credential and/or subscription; not allowing or not supporting the terminal to acquire a credential and/or subscription through a control plane; not allowing or not supporting the terminal to acquire a credential and/or subscription through a user plane; access of the terminal not allowed by a network; SNPN not allowed; and PLMN not allowed.

The capability information of the terminal includes at least one of the following: supporting or not supporting acquisition of credential and/or subscription; supporting or not supporting acquisition of credential and/or subscription through a control plane; and supporting or not supporting acquisition of credential and/or subscription through a user plane.

The capability information of the first network and/or the capability information of the first server includes at least one of the following: supporting or not supporting configuration of a credential and/or subscription; supporting or not supporting configuration of a credential and/or subscription through a control plane; and supporting or not supporting configuration of a credential and/or subscription through a user plane.

The access type information of the terminal for accessing the first network includes one of the following: a type of a first access manner and a type of a non-first access manner.

The first access manner includes at least one of the following: an access manner of accessing the network to acquire a credential and/or subscription; an access manner of accessing the network with restriction; and an access manner of accessing the network with a default credential.

The credential and/or subscription acquisition manner requested by the terminal includes at least one of the following: acquiring a credential and/or subscription through a control plane; and acquiring a credential and/or subscription through a user plane.

Optionally, the first execution module 62 is further configured to:
in a case that a first condition is satisfied, perform at least one of the following:
determining to reject access of the terminal to the first network;
sending the first reject cause;
sending a message for rejecting the access of the terminal; and
sending a message for rejecting the access of the terminal, where the message for rejecting the access of the terminal includes the first reject cause.

The first condition includes at least one of the following:
an access type of accessing the first network by the terminal is the type of the first access manner;
the terminal has no credential and/or subscription for non-restricted access to the first network;
the credential and/or subscription for the terminal to access the first network is a credential and/or subscription for a restricted access type;
authentication and/or authorization fails and the terminal is unable to access the first network; and
the first network is one of the following: a public network and a network of a public land mobile network PLMN type.

The first network satisfies at least one of the following:
not supporting a credential and/or subscription acquisition manner supported or requested by the terminal;
not allowing a credential and/or subscription acquisition manner supported or requested by the terminal;
not supporting the terminal in acquiring a credential and/or subscription of the first object via the first network; and
not allowing the terminal to acquire a credential and/or subscription of the first object via the first network.

Optionally, the first execution module 62 is further configured to:
in a case that a second condition is satisfied, perform at least one of the following:
determining to accept access of the terminal to the first network;
determining that the value of the first indication information is at least one of the following: not supporting configuration of a credential and/or subscription; not supporting configuration of a credential and/or subscription through a control plane; and not supporting configuration of a credential and/or subscription through a user plane;
sending a message for accepting the access of the terminal; and
sending a message for accepting the access of the terminal, where the message for accepting the access of the terminal includes the first indication information.

The second condition includes at least one of the following:
an access type of the terminal is the type of the non-first access manner;
the terminal has a credential and/or subscription for restricted access to the first network;
the terminal has a credential and/or subscription for non-restricted access to the first network;
authentication and/or authorization succeeds and the terminal is able to access the first network;
the first network allows or supports a first service, the first service being a service other than that for acquiring a credential and/or subscription of the first object via the first network; and
the first network is one of the following: a non-public network and a network of an SNPN type.

The first network and/or the first server satisfies at least one of the following:
not supporting a credential and/or subscription acquisition manner supported or requested by the terminal;
not allowing a credential and/or subscription acquisition manner supported or requested by the terminal;
not supporting the terminal in acquiring a credential and/or subscription of the first object via the first network; and
not allowing the terminal to acquire a credential and/or subscription of the first object via the first network.

Optionally, the type of the non-first access manner includes any one of the following:
initial registration, mobility registration update, periodic registration update, and emergency registration.

Optionally, that the first network and/or the first server does not support a credential and/or subscription acquisition manner supported or requested by the terminal includes at least one of the following:
the terminal only supports or requests acquisition of a credential and/or subscription through a control plane, and the first network and/or the first server only supports configuration of a credential and/or subscription through a user plane;
the terminal only supports or requests acquisition of a credential and/or subscription through a control plane, and the first network and/or the first server does not support configuration of a credential and/or subscription through a control plane;
the terminal only supports or requests acquisition of a credential and/or subscription through a user plane, and the first network and/or the first server only supports configuration of a credential and/or subscription through a control plane;
the terminal only supports or requests acquisition of a credential and/or subscription through a user plane, and the first network and/or the first server does not support configuration of a credential and/or subscription through a user plane; and
the first network and/or the first server does not support the terminal in acquiring a credential and/or subscription.

Optionally, that the first network and/or the first server does not allow a credential and/or subscription acquisition manner supported or requested by the terminal includes at least one of the following:
the terminal only supports or requests acquisition of a credential and/or subscription through a control plane, and the first network and/or the first server only allows configuration of a credential and/or subscription through a user plane;
the terminal only supports or requests acquisition of a credential and/or subscription through a control plane, and the first network and/or the first server does not allow configuration of a credential and/or subscription through a control plane;
the terminal only supports or requests acquisition of a credential and/or subscription through a user plane, and the first network and/or the first server only allows configuration of a credential and/or subscription through a control plane;
the terminal only supports or requests acquisition of a credential and/or subscription through a user plane, and the first network and/or the first server does not allow configuration of a credential and/or subscription through a user plane; and
the first network and/or the first server does not allow the terminal to acquire a credential and/or subscription.

In this embodiment, the information processing apparatus 60 can implement the processes implemented in the method embodiment shown in FIG. 2 of this application, with the same beneficial effects achieved. To avoid repetition, details are not described herein again.

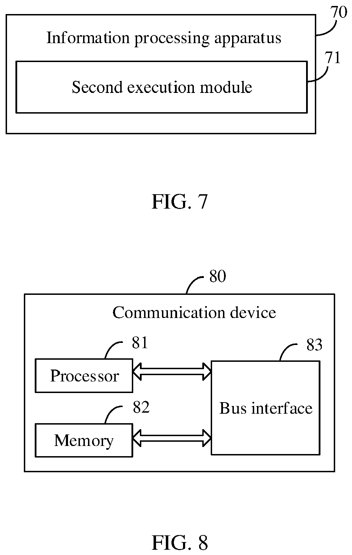

Referring to FIG. 7, an embodiment of this application provides an information processing apparatus applied to a network-side device. As shown in FIG. 7, the information processing apparatus 70 includes:
a second execution module 71, configured to perform a second operation.

The second operation includes at least one of the following:
determining to initiate deregistration to a first network, or determining not to initiate deregistration to a first network;
initiating deregistration to the first network;
deleting the first network from a first list; and
adding the first network to a second list.

The first list includes any one of the following: one or more network objects, and identifier information of one or more network objects; where a characteristic of a network in the first list includes at least one of the following: allowing the terminal to access with restriction; allowing the terminal to acquire a credential and/or subscription; and allowing the terminal to access with a default credential; or
the first list includes at least one of the following: a list of networks allowing restricted access; a list of networks capable of configuring a credential and/or subscription; and a list of networks allowing access with a default credential.

The second list includes any one of the following: one or more network objects, and identifier information of one or more network objects; where a characteristic of a network in the second list includes at least one of the following: not allowing access of the terminal; not allowing the terminal to acquire a credential and/or subscription; and not allowing the terminal to access with a default credential; or
the second list includes at least one of the following: a list of networks not allowing restricted access; a list of networks incapable of configuring a credential and/or subscription; and a list of networks not allowing access with a default credential.

The list of networks includes one or more network objects, or the list of networks includes identifier information of one or more network objects; and
the network object includes a network and/or a network group.

Optionally, the second execution module 71 is further configured to:
in a case that a third condition is satisfied, initiate deregistration to the first network.

The third condition includes at least one of the following:
an intent of the terminal for accessing the first network is to acquire the credential and/or subscription of the first object via the first network;
an access type of accessing the first network by the terminal is the type of the first access manner; and
the terminal fails to acquire the credential and/or subscription of the first object via the first network.

Optionally, the second execution module 71 is further configured to:
in a case that a fourth condition is satisfied, determine not to initiate deregistration to the first network.

An intent of the terminal for accessing the first network is not limited to acquiring the credential and/or subscription of the first object via the first network.

An access type of accessing the first network by the terminal is the type of the non-first access manner.

The terminal fails to acquire the credential and/or subscription of the first object via the first network.

Optionally, the second execution module 71 is further configured to:
in a case that a fifth condition is satisfied, delete the first network from the first list and/or add the first network to the second list.

The fifth condition includes:
the terminal fails to acquire a credential and/or subscription of a first object via the first network.

Optionally, that the terminal fails to acquire a credential and/or subscription of a first object via the first network includes at least one of the following:
the terminal fails to acquire the credential and/or subscription of the first object through a control plane;
the terminal fails to acquire the credential and/or subscription of the first object through a user plane;
a timer expires or a waiting time expires, but no credential and/ or subscription of the first object has been received from a control plane of the first network;
the initiated acquisition of the credential and/or subscription of the first object through a user plane fails;
the terminal only supports acquisition of the credential and/or subscription of the first object through a control plane, but has not received a second credential and/or subscription from a control plane of the first network before a timer expires or a waiting time expires;
the terminal only supports acquisition of the credential and/or subscription of the first object through a user plane, and an initiated request for a second credential and/or subscription through a user plane fails;
the terminal supports acquisition of the credential and/or subscription of the first object through a control plane and a user plane, but has not received a second credential and/or subscription from a control plane of the first network before a timer expires or a waiting time expires, and the initiated acquisition of the credential and/or subscription of the first object through a user plane fails; and
the terminal supports acquisition of the credential and/or subscription through a control plane and a user plane, and the initiated acquisition of the credential and/or subscription of the first object through a user plane fails.

Optionally, the second execution module 71 is further configured to:
acquire second information, and perform the second operation based on the second information.

The second information includes at least one of the following: an access reject message, a first reject cause, and first indication information; where the first indication information is used to indicate at least one of the following: not supporting the terminal in acquiring a credential and/or subscription, not supporting the terminal in acquiring a credential and/or subscription through a control plane, and not supporting the terminal in acquiring a credential and/or subscription through a user plane.

The first reject cause is used to indicate at least one of the following: not allowing or not supporting the terminal to acquire a credential and/or subscription; not allowing or not supporting the terminal to acquire a credential and/or subscription through a control plane; not allowing or not supporting the terminal to acquire a credential and/or subscription through a user plane; access of the terminal not allowed by a network; SNPN not allowed; and PLMN not allowed.

Optionally, the second execution module 71 is further configured to:
in a case that a sixth condition is satisfied, initiate deregistration to the first network.

The sixth condition includes at least one of the following:
an intent of the terminal for accessing the first network is to acquire the credential and/or subscription of the first object via the first network;
an access type of accessing the first network by the terminal is the type of the first access manner;
the first indication information indicates at least one of the following: not supporting configuration of a credential and/or subscription; not supporting configuration of a credential and/or subscription through a control plane; and not supporting configuration of a credential and/or subscription through a user plane;
the first indication information indicates not supporting the terminal in acquiring a credential and/or subscription through a control plane, and the terminal only supports acquisition of a credential and/or subscription through a control plane; and
the first indication information indicates not supporting the terminal in acquiring a credential and/or subscription through a user plane, and the terminal only supports acquisition of a credential and/or subscription through a user plane.

Optionally, the second execution module 71 is further configured to:
in a case that a seventh condition is satisfied, determine not to initiate deregistration to the first network.

The seventh condition includes at least one of the following:
an intent of the terminal for accessing the first network is not limited to acquiring the credential and/or subscription of the first object via the first network;
an access type of accessing the first network by the terminal is the type of the non-first access manner.
the first indication information indicates not supporting the terminal in acquiring a credential and/or subscription;
the first indication information indicates not supporting the terminal in acquiring a credential and/or subscription through a control plane, and the terminal only supports acquisition of a credential and/or subscription through a control plane; and
the first indication information indicates not supporting the terminal in acquiring a credential and/or subscription through a user plane, and the terminal only supports acquisition of a credential and/or subscription through a user plane.

Optionally, the second execution module 71 is further configured to:
in a case that an eighth condition is satisfied, delete the first network from the first list and/or add the first network to the second list.

The eighth condition includes at least one of the following:
an access reject message has been acquired; and
a first reject cause has been acquired or first indication information has been acquired; where
the first indication information indicates not supporting the terminal in acquiring a credential and/or subscription;
the first indication information indicates not supporting the terminal in acquiring a credential and/or subscription through a control plane, and the terminal only supports acquisition of a credential and/or subscription through a control plane; and
the first indication information indicates not supporting the terminal in acquiring a credential and/or subscription through a user plane, and the terminal only supports acquisition of a credential and/or subscription through a user plane.

Optionally, the second execution module 71 is further configured to:
in a case that a ninth condition is satisfied, delete the first network from a first list for acquiring a credential and/or subscription through a control plane and/or add the first network to a second list for acquiring a credential and/or subscription through a control plane.

The ninth condition includes:
the first indication information indicates not supporting the terminal in acquiring a credential and/or subscription through a control plane.

Optionally, the second execution module 71 is further configured to:
in a case that a tenth condition is satisfied, delete the first network from a first list for acquiring a credential and/or subscription through a user plane and/or add the first network to a second list for acquiring a credential and/or subscription through a user plane.

The tenth condition includes at least one of the following:
an access reject message has been acquired; and
a first reject cause has been acquired or first indication information has been acquired; where
the first reject cause indicates not allowing or not supporting the terminal to acquire a credential and/or subscription through a user plane; and
the first indication information indicates not supporting the terminal in acquiring a credential and/or subscription through a user plane.

In this embodiment, the information processing apparatus 70 can implement the processes implemented in the method embodiment shown in FIG. 3 of this application, with the same beneficial effects achieved. To avoid repetition, details are not described herein again.

Optionally, as shown in FIG. 8, an embodiment of this application further provides a communication device 80 including a processor 81, a memory 82, and a program or instructions stored in the memory 82 and capable of running on the processor 81. For example, in a case that the communication device 80 is a network-side device, when the program or instructions are executed by the processor 81, the processes of the foregoing method embodiment shown in FIG. 2 are implemented, with the same technical effects achieved. In a case that the communication device 80 is a network terminal, when the program or instructions are executed by the processor 81, the processes of the foregoing method embodiment shown in FIG. 3 are implemented, with the same beneficial effects achieved. To avoid repetition, details are not described herein again.

An embodiment of this application further provides a readable storage medium. The readable storage medium stores a program or instructions. When the program or instructions are executed by a processor, the processes of the method embodiment shown in FIG. 2 or FIG. 3 are implemented, with the same technical effects achieved. To avoid repetition, details are not described herein again.

The processor is a processor in the terminal described in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions for a network-side device, to implement the processes of the method embodiment shown in FIG. 2 or FIG. 3, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. An information processing method, applied to a network-side device and comprising:
acquiring first information; and
performing a first operation based on the first information; wherein
the first information comprises at least one of the following: capability information of a terminal, capability information of a first network, capability information of a first server, access type information of the terminal for accessing the first network, and a credential and/or subscription acquisition manner requested by the terminal;
the first operation comprises at least one of the following:
determining to accept access of the terminal, or determining to reject access of the terminal;
determining a reject cause;
determining a value of first indication information;
incorporating a first reject cause into a first message and sending the first message; and
incorporating the first indication information into a second message and sending the second message; wherein
the first message is a message for rejecting the access of the terminal, and the second message is a message for accepting the access of the terminal;
the first indication information is used to indicate at least one of the following: supporting or not supporting configuration of a credential and/or subscription; supporting or not supporting configuration of a credential and/or subscription through a control plane; and supporting or not supporting configuration of a credential and/or subscription through a user plane;
the first reject cause is used to indicate at least one of the following: not allowing or not supporting the terminal to acquire a credential and/or subscription; not allowing or not supporting the terminal to acquire a credential and/or subscription through a control plane; not allowing or not supporting the terminal to acquire a credential and/or subscription through a user plane; access of the terminal not allowed by a network; SNPN not allowed; and PLMN not allowed;
the capability information of the terminal comprises at least one of the following: supporting or not supporting acquisition of credential and/or subscription; supporting or not supporting acquisition of credential and/or subscription through a control plane; and supporting or not supporting acquisition of credential and/or subscription through a user plane;
the capability information of the first network and/or the capability information of the first server comprises at least one of the following: supporting or not supporting configuration of a credential and/or subscription; supporting or not supporting configuration of a credential and/or subscription through a control plane; and supporting or not supporting configuration of a credential and/or subscription through a user plane;
the access type information of the terminal for accessing the first network comprises one of the following: a type of a first access manner and a type of a non-first access manner;
the first access manner comprises at least one of the following: an access manner of accessing the network to acquire a credential and/or subscription; an access manner of accessing the network with restriction; and an access manner of accessing the network with a default credential; and
the credential and/or subscription acquisition manner requested by the terminal comprises at least one of the following: acquiring a credential and/or subscription through a control plane; and acquiring a credential and/or subscription through a user plane.

2. The method according to claim 1, wherein
the credential and/or subscription comprises at least one of the following: a credential and/or subscription of a first object, a credential and/or subscription for primary authentication and/or authorization, a credential and/or subscription for authorization, a credential and/or subscription for non-primary authentication, and a credential and/or subscription for non-authorization; wherein
the first object comprises at least one of the following: a network A, a first entity, a network accessed by the terminal, primary authentication and/or authorization, and non-primary authentication and/or authorization;
the first entity comprises one of the following: an entity in a data network, an entity outside a network to which the terminal belongs, and an entity outside the first network, wherein the first network is a network accessed by the terminal;
the network A is the same as or different from the first network;
and/or
the configuration of a credential and/or subscription comprises at least one of the following: configuring a credential and/or subscription based on restricted access, and configuring a credential and/or subscription based on non-restricted access;
and/or
the configuration of a credential and/or subscription through a control plane comprises at least one of the following: configuring a credential and/or subscription through a control plane based on restricted access, and configuring a credential and/or subscription through a control plane based on non-restricted access;
and/or
the configuration of a credential and/or subscription through a user plane comprises at least one of the following: configuring a credential and/or subscription through a user plane based on restricted access, and configuring a credential and/or subscription through a user plane based on non-restricted access;
and/or
the acquisition of a credential and/or subscription comprises: acquiring a credential and/or subscription based on restricted access, and acquiring a credential and/or subscription based on non-restricted access;
and/or
the acquisition of a credential and/or subscription through a control plane comprises at least one of the following: acquiring a credential and/or subscription through a control plane based on restricted access, and acquiring a credential and/or subscription through a control plane based on non-restricted access;
and/or
the acquisition of a credential and/or subscription through a user plane comprises at least one of the following: acquiring a credential and/or subscription through a user plane based on restricted access, and acquiring a credential and/or subscription through a user plane based on non-restricted access.

3. The method according to claim 1, wherein the performing a first operation comprises:
in a case that a first condition is satisfied, performing at least one of the following:
determining to reject access of the terminal to the first network;
sending the first reject cause;
sending a message for rejecting the access of the terminal; and
sending a message for rejecting the access of the terminal, wherein the message for rejecting the access of the terminal comprises the first reject cause; wherein
the first condition comprises at least one of the following:
an access type of accessing the first network by the terminal is the type of the first access manner;
the terminal has no credential and/or subscription for non-restricted access to the first network;
the credential and/or subscription for the terminal to access the first network is a credential and/or subscription for a restricted access type;
authentication and/or authorization fails and the terminal is unable to access the first network; and
the first network is one of the following: a public network and a network of a public land mobile network PLMN type; wherein
the first network satisfies at least one of the following:
not supporting a credential and/or subscription acquisition manner supported or requested by the terminal;
not allowing a credential and/or subscription acquisition manner supported or requested by the terminal;
not supporting the terminal in acquiring a credential and/or subscription of the first object via the first network; and
not allowing the terminal to acquire a credential and/or subscription of the first object via the first network.

4. The method according to claim 1, wherein the performing a first operation comprises:
in a case that a second condition is satisfied, performing at least one of the following:
determining to accept access of the terminal to the first network;
determining that the value of the first indication information is at least one of the following: not supporting configuration of a credential and/or subscription; not supporting configuration of a credential and/or subscription through a control plane; and not supporting configuration of a credential and/or subscription through a user plane;
sending a message for accepting the access of the terminal; and
sending a message for accepting the access of the terminal, wherein the message for accepting the access of the terminal comprises the first indication information; wherein
the second condition comprises at least one of the following:
an access type of the terminal is the type of the non-first access manner;
the terminal has a credential and/or subscription for restricted access to the first network;
the terminal has a credential and/or subscription for non-restricted access to the first network;
authentication and/or authorization succeeds and the terminal is able to access the first network;
the first network allows or supports a first service, the first service being a service other than that for acquiring a credential and/or subscription of the first object via the first network; and
the first network is one of the following: a non-public network and a network of an SNPN type; wherein
the first network and/or the first server satisfies at least one of the following:
not supporting a credential and/or subscription acquisition manner supported or requested by the terminal;
not allowing a credential and/or subscription acquisition manner supported or requested by the terminal;
not supporting the terminal in acquiring a credential and/or subscription of the first object via the first network; and
not allowing the terminal to acquire a credential and/or subscription of the first object via the first network.

5. The method according to claim 1 or 4, wherein the type of the non-first access manner comprises any one of the following:
initial registration, mobility registration update, periodic registration update, and emergency registration.

6. The method according to claim 3 or 4, wherein that the first network and/or the first server does not support a credential and/or subscription acquisition manner supported or requested by the terminal comprises at least one of the following:
the terminal only supports or requests acquisition of a credential and/or subscription through a control plane, and the first network and/or the first server only supports configuration of a credential and/or subscription through a user plane;
the terminal only supports or requests acquisition of a credential and/or subscription through a control plane, and the first network and/or the first server does not support configuration of a credential and/or subscription through a control plane;
the terminal only supports or requests acquisition of a credential and/or subscription through a user plane, and the first network and/or the first server only supports configuration of a credential and/or subscription through a control plane;
the terminal only supports or requests acquisition of a credential and/or subscription through a user plane, and the first network and/or the first server does not support configuration of a credential and/or subscription through a user plane; and
the first network and/or the first server does not support the terminal in acquiring a credential and/or subscription.

7. The method according to claim 3 or 4, wherein that the first network and/or the first server does not allow a credential and/or subscription acquisition manner supported or requested by the terminal comprises at least one of the following:
the terminal only supports or requests acquisition of a credential and/or subscription through a control plane, and the first network and/or the first server only allows configuration of a credential and/or subscription through a user plane;
the terminal only supports or requests acquisition of a credential and/or subscription through a control plane, and the first network and/or the first server does not allow configuration of a credential and/or subscription through a control plane;
the terminal only supports or requests acquisition of a credential and/or subscription through a user plane, and the first network and/or the first server only allows configuration of a credential and/or subscription through a control plane;
the terminal only supports or requests acquisition of a credential and/or subscription through a user plane, and the first network and/or the first server does not allow configuration of a credential and/or subscription through a user plane; and
the first network and/or the first server does not allow the terminal to acquire a credential and/or subscription.

8. An information processing method, applied to a terminal and comprising:
performing a second operation, wherein
the second operation comprises at least one of the following:
determining to initiate deregistration to a first network, or determining not to initiate deregistration to a first network;
initiating deregistration to the first network;
deleting the first network from a first list; and
adding the first network to a second list; wherein
the first list comprises any one of the following: one or more network objects, and identifier information of one or more network objects; wherein a characteristic of a network in the first list comprises at least one of the following: allowing the terminal to access with restriction; allowing the terminal to acquire a credential and/or subscription; and allowing the terminal to access with a default credential; or
the first list comprises at least one of the following: a list of networks allowing restricted access; a list of networks capable of configuring a credential and/or subscription; and a list of networks allowing access with a default credential;
the second list comprises any one of the following: one or more network objects, and identifier information of one or more network objects; wherein a characteristic of a network in the second list comprises at least one of the following: not allowing the terminal to access; not allowing the terminal to acquire a credential and/or subscription; and not allowing the terminal to access with a default credential; or
the second list comprises at least one of the following: a list of networks not allowing restricted access; a list of networks incapable of configuring a credential and/or subscription; and a list of networks not allowing access with a default credential;
the list of networks comprises one or more network objects, or the list of networks comprises identifier information of one or more network objects; and
the network object comprises a network and/or a network group.

9. The method according to claim 8, wherein
the credential and/or subscription comprises at least one of the following: a credential and/or subscription of a first object, a credential and/or subscription for primary authentication and/or authorization, a credential and/or subscription for authorization, a credential and/or subscription for non-primary authentication, and a credential and/or subscription for non-authorization; wherein
the first object comprises at least one of the following: a network A, a first entity, a network accessed by the terminal, primary authentication and/or authorization, and non-primary authentication and/or authorization;
the first entity comprises one of the following: an entity in a data network, an entity outside a network to which the terminal belongs, and an entity outside the first network, wherein the first network is a network accessed by the terminal;
the network A is the same as or different from a network in the first list;
and/or
the network A is the same as or different from a network in the second list;
and/or
the acquisition of a credential and/or subscription comprises at least one of the following: acquiring a credential and/or subscription through a control plane; and acquiring a credential and/or subscription through a user plane;
and/or
the list of networks capable of configuring a credential and/or subscription comprises at least one of the following: a list of networks capable of configuring a credential and/or subscription through a control plane, and a list of networks capable of configuring a credential and/or subscription through a user plane;
and/or
the allowing the terminal to acquire a credential and/or subscription comprises at least one of the following: allowing the terminal to acquire a credential and/or subscription through a control plane, and allowing the terminal to acquire a credential and/or subscription through a user plane.

10. The method according to claim 8, wherein
the first list is a first list corresponding to a first object, first lists corresponding to different first objects being the same or different;
and/or
the second list is a second list corresponding to a first object, second lists corresponding to different first objects being the same or different;
and/or
the list of networks capable of configuring a credential and/or subscription comprises a list of networks capable of configuring a credential and/or subscription of a first object;
and/or
the list of networks incapable of configuring a credential and/or subscription comprises a list of networks incapable of configuring a credential and/or subscription of a first object;
and/or
the allowing the terminal to acquire a credential and/or subscription comprises: allowing the terminal to acquire a credential and/or subscription of a first object;
and/or
the not allowing the terminal to acquire a credential and/or subscription comprises: not allowing the terminal to acquire a credential and/or subscription of a first object.

11. The method according to claim 10, wherein the first list corresponding to the first object comprises: a control plane-based first list corresponding to the first object, and a user plane-based first list corresponding to the first object; wherein
the control plane-based first list corresponding to the first object is the same as or different from the user plane-based first list corresponding to the first object;
a network in the control plane-based first list corresponding to the first object comprises: a network allowing the terminal to acquire a credential and/or subscription of the first object through a control plane;
a network in the user plane-based first list corresponding to the first object comprises: a network allowing the terminal to acquire a credential and/or subscription of the first object through a user plane;
and/or
the second list corresponding to the first object comprises: a control plane-based second list corresponding to the first object, and a user plane-based second list corresponding to the first object; wherein
the control plane-based second list corresponding to the first object is the same as or different from the user plane-based second list corresponding to the first object;
a network in the control plane-based second list corresponding to the first object comprises: a network not allowing the terminal to acquire a credential and/or subscription of the first object through a control plane;
a network in the user plane-based second list corresponding to the first object comprises: a network not allowing the terminal to acquire a credential and/or subscription of the first object through a user plane;
and/or
the list of networks capable of configuring a credential and/or subscription of a first object comprises at least one of the following: a list of networks capable of configuring the credential and/or subscription of the first object through a control plane, and a list of networks capable of configuring the credential and/or subscription of the first object through a user plane;
and/or
the list of networks incapable of configuring a credential and/or subscription of a first object comprises at least one of the following: a list of networks incapable of configuring the credential and/or subscription of the first object through a control plane, and a list of networks incapable of configuring the credential and/or subscription of the first object through a user plane;
and/or
the allowing the terminal to acquire a credential and/or subscription of a first object comprises at least one of the following: allowing the terminal to acquire the credential and/or subscription of the first object through a control plane, and allowing the terminal to acquire the credential and/or subscription of the first object through a user plane;
and/or
the not allowing the terminal to acquire a credential and/or subscription of a first object comprises at least one of the following: not allowing the terminal to acquire the credential and/or subscription of the first object through a control plane, and not allowing the terminal to acquire the credential and/or subscription of the first object through a user plane.

12. The method according to any one of claims 8 to 11, wherein the performing a second operation comprises:
in a case that a third condition is satisfied, initiating deregistration to the first network; wherein
the third condition comprises at least one of the following:
an intent of the terminal for accessing the first network is to acquire the credential and/or subscription of the first object via the first network;
an access type of accessing the first network by the terminal is the type of the first access manner; and
the terminal fails to acquire the credential and/or subscription of the first object via the first network.

13. The method according to any one of claims 8 to 11, wherein the performing a second operation comprises:
in a case that a fourth condition is satisfied, determining not to initiate deregistration to the first network; wherein
an intent of the terminal for accessing the first network is not limited to acquiring the credential and/or subscription of the first object via the first network;
an access type of accessing the first network by the terminal is the type of the non-first access manner; and
the terminal fails to acquire the credential and/or subscription of the first object via the first network.

14. The method according to claim 8, wherein the performing a second operation comprises:
in a case that a fifth condition is satisfied, deleting the first network from the first list and/or adding the first network to the second list; wherein
the fifth condition comprises:
the terminal fails to acquire a credential and/or subscription of a first object via the first network.

15. The method according to any one of claims 10 to 14, wherein that the terminal fails to acquire a credential and/or subscription of a first object via the first network comprises at least one of the following:
the terminal fails to acquire the credential and/or subscription of the first object through a control plane;
the terminal fails to acquire the credential and/or subscription of the first object through a user plane;
a timer expires or a waiting time expires, but no credential and/ or subscription of the first object has been received from a control plane of the first network;
the initiated acquisition of the credential and/or subscription of the first object through a user plane fails;
the terminal only supports acquisition of the credential and/or subscription of the first object through a control plane, but has not received a second credential and/or subscription from a control plane of the first network before a timer expires or a waiting time expires;
the terminal only supports acquisition of the credential and/or subscription of the first object through a user plane, and an initiated request for a second credential and/or subscription through a user plane fails;
the terminal supports acquisition of the credential and/or subscription of the first object through a control plane and a user plane, but has not received a second credential and/or subscription from a control plane of the first network before a timer expires or a waiting time expires, and the initiated acquisition of the credential and/or subscription of the first object through a user plane fails; and
the terminal supports acquisition of the credential and/or subscription through a control plane and a user plane, and the initiated acquisition of the credential and/or subscription of the first object through a user plane fails.

16. The method according to any one of claims 8 to 11, wherein the performing a second operation comprises:
acquiring second information, and performing the second operation based on the second information; wherein
the second information comprises at least one of the following: an access reject message, a first reject cause, and first indication information; wherein the first indication information is used to indicate at least one of the following: not supporting the terminal in acquiring a credential and/or subscription, not supporting the terminal in acquiring a credential and/or subscription through a control plane, and not supporting the terminal in acquiring a credential and/or subscription through a user plane; and
the first reject cause is used to indicate at least one of the following: not allowing or not supporting the terminal to acquire a credential and/or subscription; not allowing or not supporting the terminal to acquire a credential and/or subscription through a control plane; not allowing or not supporting the terminal to acquire a credential and/or subscription through a user plane; access of the terminal not allowed by a network; SNPN not allowed; and PLMN not allowed.

17. The method according to claim 16, wherein the performing a second operation comprises:
in a case that a sixth condition is satisfied, initiating deregistration to the first network; wherein
the sixth condition comprises at least one of the following:
an intent of the terminal for accessing the first network is to acquire the credential and/or subscription of the first object via the first network;
an access type of accessing the first network by the terminal is the type of the first access manner;
the first indication information indicates at least one of the following: not supporting configuration of a credential and/or subscription; not supporting configuration of a credential and/or subscription through a control plane; and not supporting configuration of a credential and/or subscription through a user plane;
the first indication information indicates not supporting the terminal in acquiring a credential and/or subscription through a control plane, and the terminal only supports acquisition of a credential and/or subscription through a control plane; and
the first indication information indicates not supporting the terminal in acquiring a credential and/or subscription through a user plane, and the terminal only supports acquisition of a credential and/or subscription through a user plane.

18. The method according to claim 16, wherein the performing a second operation comprises:
in a case that a seventh condition is satisfied, determining not to initiate deregistration to the first network; wherein
the seventh condition comprises at least one of the following:
an intent of the terminal for accessing the first network is not limited to acquiring the credential and/or subscription of the first object via the first network;
an access type of accessing the first network by the terminal is the type of the non-first access manner;
the first indication information indicates not supporting the terminal in acquiring a credential and/or subscription;
the first indication information indicates not supporting the terminal in acquiring a credential and/or subscription through a control plane, and the terminal only supports acquisition of a credential and/or subscription through a control plane; and
the first indication information indicates not supporting the terminal in acquiring a credential and/or subscription through a user plane, and the terminal only supports acquisition of a credential and/or subscription through a user plane.

19. The method according to claim 16, wherein the performing a second operation comprises:
in a case that an eighth condition is satisfied, deleting the first network from the first list and/or adding the first network to the second list; wherein
the eighth condition comprises at least one of the following:
an access reject message has been acquired; and
a first reject cause has been acquired or first indication information has been acquired; wherein
the first indication information indicates not supporting the terminal in acquiring a credential and/or subscription;
the first indication information indicates not supporting the terminal in acquiring a credential and/or subscription through a control plane, and the terminal only supports acquisition of a credential and/or subscription through a control plane; and
the first indication information indicates not supporting the terminal in acquiring a credential and/or subscription through a user plane, and the terminal only supports acquisition of a credential and/or subscription through a user plane.

20. The method according to claim 16, wherein the performing a second operation comprises:
in a case that a ninth condition is satisfied, deleting the first network from a first list for acquiring a credential and/or subscription through a control plane and/or adding the first network to a second list for acquiring a credential and/or subscription through a control plane; wherein
the ninth condition comprises:
the first indication information indicates not supporting the terminal in acquiring a credential and/or subscription through a control plane.

21. The method according to claim 16, wherein the performing a second operation comprises:
in a case that a tenth condition is satisfied, deleting the first network from a first list for acquiring a credential and/or subscription through a user plane and/or adding the first network to a second list for acquiring a credential and/or subscription through a user plane; wherein
the tenth condition comprises at least one of the following:
an access reject message has been acquired; and
a first reject cause has been acquired or first indication information has been acquired; wherein
the first reject cause indicates not allowing or not supporting the terminal to acquire a credential and/or subscription through a user plane; and
the first indication information indicates not supporting the terminal in acquiring a credential and/or subscription through a user plane.

22. The method according to claim 8, wherein
the configuration of a credential and/or subscription comprises at least one of the following: configuring a credential and/or subscription based on restricted access, and configuring a credential and/or subscription based on non-restricted access;
and/or
the configuration of a credential and/or subscription through a control plane comprises at least one of the following: configuring a credential and/or subscription through a control plane based on restricted access, and configuring a credential and/or subscription through a control plane based on non-restricted access;
and/or
the configuration of a credential and/or subscription through a user plane comprises at least one of the following: configuring a credential and/or subscription through a user plane based on restricted access, and configuring a credential and/or subscription through a user plane based on non-restricted access;
and/or
the acquisition of a credential and/or subscription comprises: acquiring a credential and/or subscription based on restricted access, and acquiring a credential and/or subscription based on non-restricted access;
and/or
the acquisition of a credential and/or subscription through a control plane comprises at least one of the following: acquiring a credential and/or subscription through a control plane based on restricted access, and acquiring a credential and/or subscription through a control plane based on non-restricted access;
and/or
the acquisition of a credential and/or subscription through a user plane comprises at least one of the following: acquiring a credential and/or subscription through a user plane based on restricted access, and acquiring a credential and/or subscription through a user plane based on non-restricted access.

23. An information processing apparatus, applied to a network-side device and comprising:
an acquiring module, configured to acquire first information; and
a first execution module, configured to perform a first operation based on the first information; wherein
the first information comprises at least one of the following: capability information of a terminal, capability information of a first network, capability information of a first server, access type information of the terminal for accessing the first network, and a credential and/or subscription acquisition manner requested by the terminal;
the first operation comprises at least one of the following:
determining to accept access of the terminal, or determining to reject access of the terminal;
determining a reject cause;
determining a value of first indication information;
incorporating a first reject cause into a first message and sending the first message; and
incorporating the first indication information into a second message and sending the second message; wherein
the first message is a message for rejecting the access of the terminal, and the second message is a message for accepting the access of the terminal;
the first indication information is used to indicate at least one of the following: supporting or not supporting configuration of a credential and/or subscription; supporting or not supporting configuration of a credential and/or subscription through a control plane; and supporting or not supporting configuration of a credential and/or subscription through a user plane;
the first reject cause is used to indicate at least one of the following: not allowing or not supporting the terminal to acquire a credential and/or subscription; not allowing or not supporting the terminal to acquire a credential and/or subscription through a control plane; not allowing or not supporting the terminal to acquire a credential and/or subscription through a user plane; access of the terminal not allowed by a network; SNPN not allowed; and PLMN not allowed;
the capability information of the terminal comprises at least one of the following: supporting or not supporting acquisition of credential and/or subscription; supporting or not supporting acquisition of credential and/or subscription through a control plane; and supporting or not supporting acquisition of credential and/or subscription through a user plane;
the capability information of the first network and/or the capability information of the first server comprises at least one of the following: supporting or not supporting configuration of a credential and/or subscription; supporting or not supporting configuration of a credential and/or subscription through a control plane; and supporting or not supporting configuration of a credential and/or subscription through a user plane;
the access type information of the terminal for accessing the first network comprises one of the following: a type of a first access manner and a type of a non-first access manner;
the first access manner comprises at least one of the following: an access manner of accessing the network to acquire a credential and/or subscription; an access manner of accessing the network with restriction; and an access manner of accessing the network with a default credential; and
the credential and/or subscription acquisition manner requested by the terminal comprises at least one of the following: acquiring a credential and/or subscription through a control plane; and acquiring a credential and/or subscription through a user plane.

24. An information processing apparatus, applied to a terminal and comprising:
a second execution module, configured to perform a second operation, wherein
the second operation comprises at least one of the following:
determining to initiate deregistration to a first network, or determining not to initiate deregistration to a first network;
initiating deregistration to the first network;
deleting the first network from a first list; and
adding the first network to a second list; wherein
the first list comprises any one of the following: one or more network objects, and identifier information of one or more network objects; wherein a characteristic of a network in the first list comprises at least one of the following: allowing the terminal to access with restriction; allowing the terminal to acquire a credential and/or subscription; and allowing the terminal to access with a default credential; or
the first list comprises at least one of the following: a list of networks allowing restricted access; a list of networks capable of configuring a credential and/or subscription; and a list of networks allowing access with a default credential;
the second list comprises any one of the following: one or more network objects, and identifier information of one or more network objects; wherein a characteristic of a network in the second list comprises at least one of the following: not allowing access of the terminal; not allowing the terminal to acquire a credential and/or subscription; and not allowing the terminal to access with a default credential; or
the second list comprises at least one of the following: a list of networks not allowing restricted access; a list of networks incapable of configuring a credential and/or subscription; and a list of networks not allowing access with a default credential;
the list of networks comprises one or more network objects, or the list of networks comprises identifier information of one or more network objects; and
the network object comprises a network and/or a network group.

25. A communication device, comprising a processor, a memory, and a program or instructions stored in the memory and capable of running on the processor, wherein when the program or instructions are executed by the processor, the steps of the information processing method according to any one of claims 1 to 7 are implemented, or the steps of the information processing method according to any one of claims 8 to 22 are implemented.

26. A readable storage medium, wherein the readable storage medium stores a program or instructions, and when the program or instructions are executed by a processor, the steps of the information processing method according to any one of claims 1 to 7 are implemented, or the steps of the information processing method according to any one of claims 8 to 22 are implemented.

27. A chip, wherein the chip comprises a processor and a communication interface, the communication interface is coupled to the processor, and the processor is configured to run a program or instructions on a network device, to implement the steps of the information processing method according to any one of claims 1 to 7, or the steps of the information processing method according to any one of claims 8 to 22.

28. A computer program product, wherein the computer program product is stored in a non-volatile storage medium, and the computer program product is executed by at least one processor to implement the steps of the information processing method according to any one of claims 1 to 7 or to implement the steps of the information processing method according to any one of claims 8 to 22.
